# EUROPÄISCHE PATENTSCHRIFT

(11) **EP 4 055 309 B1**
(45) Veröffentlichungstag und Bekanntmachung des Hinweises auf die Patenterteilung: **19.02.2025**
(21) Anmeldenummer: 20808304.8
(22) Anmeldetag: 02.11.2020
(51) Int. Cl.: F16L 21/02, F16L 25/14, H01M 10/6556, F16L 39/00

(54) **VERBINDER UND VERBINDERANORDNUNG FÜR MEHRKAMMERPROFILE UND/ODER -LEITUNGEN**
CONNECTOR AND CONNECTOR ASSEMBLY FOR MULTI-CHAMBER PROFILES AND/OR CONDUITS
RACCORD ET ENSEMBLE DE RACCORDEMENT POUR PROFILÉS ET/OU CONDUITES À CHAMBRES MULTIPLES

(30) Priorität: 05.11.2019 DE 102019129828
(43) Veröffentlichungstag der Anmeldung: 14.09.2022
(73) Patentinhaber: NORMA Germany GmbH, 63477 Maintal (DE)
(72) Erfinder: UNGER, Dennis, 63477 Maintal (DE); HENRICH, Detlef, 63477 Maintal (DE); HARM, Nina, 63477 Maintal (DE)
(74) Vertreter: Patentanwälte Olbricht Buchhold Keulertz
(86) Internationale Anmeldenummer: PCT/EP2020/080639
(87) Internationale Veröffentlichungsnummer: WO 2021/089459

(56) Entgegenhaltungen:
- CN-A- 108 539 319
- DE-A1- 102016 125 859
- US-A1- 2017 343 144

## Beschreibung

Die Erfindung betrifft einen Verbinder gemäß dem Oberbegriff von Anspruch 1 und eine Verbinderanordnung gemäß Anspruch 10.

Aus dem Stand der Technik sind unterschiedliche Verbinder zum Verbinden unterschiedlich dimensionierter Fluidleitungen bekannt. Im Bereich von Elektrofahrzeugen werden beispielsweise Verbinder benötigt, mittels derer unterschiedliche Fluidleitungen einer Temperaturregelungseinrichtung von Energiespeichern miteinander koppelbar sind. Bei den Energiespeichern kann es sich beispielsweise um Akkumulatoren oder Batterien handeln. Die vorliegende Erfindung bezieht sich auf einen solchen Verbinder, der im Bereich einer Temperaturregelungseinrichtung Verwendung finden kann. Erfindungsgemäße Verbinder und Verbinderanordnungen können selbstverständlich auch in anderen Bereichen als im Fahrzeugbau bzw. Elektrofahrzeugbau eingesetzt werden. In Frage kommt der Einsatz prinzipiell in allen Bereichen bzw. Anwendungen, in welchen unterschiedlich dimensionierte Fluidleitungen miteinander verbunden werden und ein erhöhter Kühlbedarf bei begrenztem Bauraum besteht. Denkbar ist der Einsatz im Anlagenbau, insbesondere in der Chemieindustrie, im Bereich der Lebensmittelindustrie oder der Pharmaindustrie. Der Einsatz der Erfindung ist besonders dort denkbar, wo Produktionsanlagen gekühlt werden müssen und wo beschränkte Platzverhältnisse herrschen bzw. wo der vorhandene Bauraum begrenzt ist. Der Einsatz ist ferner in Nutzfahrzeugen mit herkömmlichen Antrieben denkbar, beispielsweise bei Baggern, Forstmaschinen und Schienenfahrzeugen.

Gattungsgemäße Verbinder werden dazu genutzt, um übliche Rohrleitungen kreisförmigen Querschnitts mit Flachprofilen bzw. mit Leitungen zu verbinden, die einen flachen, länglichen Querschnitt aufweisen, und bei denen eine Mehrzahl voneinander getrennter, in der Regel parallel verlaufender Leitungskanälen ein entsprechendes Flachprofil bilden.

Die US2017343144 A1 zeigt eine Fluidverbindungsanordnung, die einen Verbindungskörper umfasst mit einem Zwischenabschnitt, der sich zwischen gegenüberliegenden Endabschnitten erstreckt und eine erste Bohrung aufweist. Der Verbinderkörper hat eine längliche Wand, die von dem Zwischenabschnitt nach außen ragt und eine zweite Bohrung umgibt, die sich in die erste Bohrung öffnet. Ein flaches Rohr, das aus einem zweiten Material besteht, das sich von dem ersten Material unterscheidet, und das mindestens einen Fluiddurchlass aufweist, steht in Fluidverbindung mit der zweiten Bohrung des Verbinderkörpers.

Hierbei bestehen hohe Anforderungen an die Betriebssicherheit der Energiespeicher, der entsprechenden Temperaturregelungseinrichtung und somit auch der darin verbauten Verbinder.

Es müssen insbesondere die in der Autobranche üblichen Sicherheitsstandards eingehalten werden. Es ist zum Beispiel sicherzustellen, dass jegliche Leckagen innerhalb des Energiespeichers verhindert werden. Ferner müssen die Verbinder dazu ausgelegt sein, den Druckverhältnissen in üblicherweise eingesetzte Fluiden wie Wasser-Glykol-Gemischen zu widerstehen.

Ein Grundproblem bei derartigen Verbindern ergibt sich daraus, dass sie Leitungen zweier völlig unterschiedlicher Geometrien miteinander sicher koppeln müssen, von denen eine gänzlich unübliche Geometrie mit einem schmalen, nahezu linienförmigen Querschnitt ist. Dieser schmale Querschnitt verkompliziert die notwendige Abdichtung der Verbindung. Außerdem erschwert es der schmale Querschnitt mit seinen entsprechenden geraden Ebenen die flachröhrenförmige Leitung in axialer Richtung am Verbinder zu fixieren. Denn das Flachprofil kann beispielsweise nicht mittels eines Gewindes gesichert werden.

Durch die schnell fortschreitende Entwicklung im Bereich der Ladegeschwindigkeit von Energiespeichern und der Leistungsanforderungen entsprechender Elektrofahrzeuge steigert sich auch die Anforderung an die Temperaturregelungseinrichtung der Energiespeicher. Dies wiederum macht es erforderlich entsprechende Verbesserung auch im Bereich der Fluidleitungen und deren Verbindern umzusetzen.

Vor diesem Hintergrund ist es Aufgabe der Erfindung, einen verbesserten Verbinder bereitzustellen, mittels dem Fluidleitungen deutlich unter-schiedlicher Geometrien dicht und fest miteinander gekoppelt werden können. Der Verbinder soll zudem möglichst einfach in der Herstellung sein und eine einfache möglichst werkzeuglose und/oder automatische Herstellung einer entsprechenden Verbindung ermöglichen. Der Verbinder kann im Bereich automobiler Energiespeicher und allgemein in jeglichen Bereichen Verwendung finden, in denen unterschiedlichen Fluidleitungen miteinander gekoppelt werden müssen. Der Verbinder bietet besondere Vorteile in Bereichen mit beschränktem Bauraum und in Anwendungen mit erhöhtem Kühlbedarf. Hauptmerkmale der Erfindung sind in den Ansprüchen 1 und 10 angegeben. Ausgestaltungen sind Gegenstand der Ansprüche 2 bis 9.

Die Erfindung betrifft einen Verbinder für zwei Fluidleitungen bzw. für Mehrkammerprofile und/oder -leitungen unterschiedlicher Geometrien. Der Verbinder ist dazu eingerichtet, diese beiden Fluidleitungen miteinander zu verbinden. Der Verbinder umfasst ein Gehäuse, mit einem ersten und einem zweiten Anschlussabschnitt und mit einem fluidisch verbindenden Fluidkanal. Die Anschlussabschnitte sind dazu ausgebildet, mit den Fluidleitungen gekoppelt zu werden. Der Verbinder umfasst ferner ein Verriegelungselement, das mit dem Gehäuse koppelbar ist, und eine Dichtung, die zwischen dem Gehäuse und dem Verriegelungselement anordenbar ist. Das Verriegelungselement und das Gehäuse sind zueinander so anordenbar, dass zwischen dem Gehäuse und dem Verriegelungselement ein Aufnahmeabschnitt zur Aufnahme der Dichtung gebildet ist.

Durch das Koppeln des Gehäuses mit dem Verriegelungselement kann die Dichtung und/oder eine der beiden Fluidleitungen an dem Verbinder festgestellt, insbesondere festgeklemmt werden. Das Gehäuse und das Verriegelungselement können beispielsweise formschlüssig so miteinander in Eingriff gebracht werden, dass die Dichtung zwischen den beiden Gehäuseteilen, also zwischen Gehäuse und Verriegelungselement, eingeschlossen, festgestellt und/oder zum Dichten unter Spannung gesetzt wird und dabei verformt wird. Die eine Fluidleitung kann im gekoppelten Zustand der beiden Gehäuseteile zumindest in eine radiale Richtung festgestellt sein. Als radiale Richtung ist vorliegend eine Richtung zu verstehen, die senkrecht zur Längsrichtung bzw. zur Hauptströmungsrichtung der Fluidleitung steht.

Es ist ferner vorgesehen, dass der erste Anschlussabschnitt zum Anschließen einer ersten Fluidleitung mit einem länglichen Querschnitt ausgebildet ist und der zweite Anschlussabschnitt zum Anschließen einer zweiten Fluidleitung mit einem weiteren, insbesondere runden, Querschnitt ausgebildet ist.

Weiterhin ist vorgesehen, dass am Verriegelungselement ein Feststellabschnitt vorgesehen ist, der zum Feststellen der ersten Fluidleitung ausgebildet ist und dass der Feststellabschnitt wenigstens eine Ausnehmung zum Einführen eines Feststellelements umfasst, wobei das Feststellelement dazu ausgebildet ist, die erste Fluidleitung formschlüssig am Verbinder festzustellen.

Vorteilhafterweise können so zwei Fluidleitungen unterschiedlicher Geometrien einfach und kostengünstig leckagefrei miteinander verbunden werden.

In einer bevorzugten Ausführungsform ist das Gehäuse und/oder das Verriegelungselement einstückig gefertigt, insbesondere spritzgegossen oder druckgegossen oder additiv hergestellt sind. Die Gehäuseteile können dabei entsprechend aus Metall und/oder Kunststoff gefertigt sein. Durch die Nutzung von Gussverfahren zur Gehäuseteilherstellung kann diese besonders kostengünstig und massenfertigungstauglich erfolgen. Unter additiven Herstellungsverfahren sind insbesondere alle gängigen 3D-Druckverfahren zu verstehen.

In einer weiteren bevorzugten Ausführung ist denkbar, dass das Gehäuse und das Verriegelungselement miteinander verrastbar sind. Eine solche Verrastung stellt eine besonders günstige und einfach Form der Verbindung beider Komponenten dar. Hierzu können Schnappverbindungen und entsprechende Ausnehmungen an dem Gehäuseteil und dem Verriegelungselement vorgesehen sein, die miteinander in Eingriff stehen, wenn die beiden Teile in- bzw. aneinander positioniert werden

In einer weiteren bevorzugten Ausführung ist denkbar, dass am Gehäuse ein Feststellabschnitt vorgesehen ist, der zum Feststellen der ersten Fluidleitung ausgebildet ist. Der Feststellabschnitt kann dazu ausgebildet sein, die erste Fluidleitung in einer axialen Richtung festzustellen. Hierdurch kann vorteilhafterweise sichergestellt werden, dass die Fluidleitung nicht ungewollt aus einem mit dem Verbinder gekoppelten Zustand in einem vom Verbinder entkoppelten Zustand wechselt und dadurch ein durch den Verbinder strömendes Fluid ungewollt aus diesem herausströmt.

In einer besonders bevorzugten Ausführung kann dabei vorgesehen sein, dass der Feststellabschnitt wenigstens eine Schnappverbindung umfasst, wobei das Feststellelement und die Schnappverbindung dazu ausgebildet sind, die erste Fluidleitung formschlüssig am Verbinder festzustellen. Die Fluidleitung kann hierfür eine Ausnehmung oder Durchführung umfassen, in die das Feststellelement bzw. die Schnappverbindung wenigstens teilweise einführbar ist. In einer einfachen Ausführung kann die Schnappverbindung einstückig mit dem entsprechenden Gehäuseteil ausgeführt sein. Die Schnappverbindung kann so beschaffen sein, dass beim Einführen der ersten Fluidleitung in den Verbinder die Schnappverbindung in die Ausnehmung oder Durchführung der Fluidleitung einrastet. Die Fluidleitung ist dadurch in axialer Richtung festgestellt.

In einer weiteren bevorzugten Ausführung ist denkbar, dass der Verbinder aus genau den drei Bauteilen Gehäuse, Verriegelungselement und Dichtung besteht oder dass der Verbinder aus den drei Bauteilen Gehäuse, Verriegelungselement, Dichtung und wenigstens einem Feststellelement besteht. Die beiden Fluidleitungen können in einem miteinander verbundenen Zustand mit allen genannten Bauteilen in unmittelbarem Kontakt sein. Bei dem Feststellelement kann es sich um ein von den anderen drei Bauteilen getrenntes Bauteil wie einen Sicherungsstift, eine Blecheinlage, welche insbesondere aus Federstahl gefertigt sein kann oder eine sonstige Arretierungsvorrichtung handeln.

In einer weiteren bevorzugten Ausführung ist denkbar, dass die Außenmaße des Gehäuses und des Verriegelungselements in ihren Querschnitten einander gleichen. Hierdurch kann ein einheitliches Äußeres des Verbinders in einem Zustand sichergestellt werden, in welchem das Gehäuse und das Verriegelungselement miteinander gekoppelt sind. Die beiden Gehäuseteile können somit unterschiedliche Längserstreckungen aufweisen, aber keines der beiden Gehäuseteile erstreckt sich in einer radialen Richtung wesentlich weiter als das jeweils andere Gehäuseteil.

In einer weiteren bevorzugten Ausführung ist denkbar, dass der Fluidkanal wenigstens abschnittsweise als flache und ebene Ausnehmung innerhalb des Gehäuses ausgebildet ist. Unter einer flachen Ausnehmung ist eine solche zu verstehen, die sich in zwei zueinander rechtwinklige Raumrichtungen deutlich weiter erstreck als in die dritte Raumrichtung. Ein solcher flächiger Fluidkanal als Verbindungskanal zwischen den zwei deutlich unterschiedlichen Fluidleitungen ermöglicht einen möglichst stetigen, ungehinderten Fluidstrom zwischen den beiden Fluidleitungen, welcher mit entsprechend niedrigem Durchflusswiderstand bzw. niedrigem Druckverlust aufrechterhalten werden kann.

In einer weiteren bevorzugten Ausführung ist denkbar, dass die erste Fluidleitung wenigstens teilweise in den Fluidkanal einführbar ist, und/oder dass das Gehäuse außen Versteifungsrippen umfasst. Durch die planare bzw. flächige Ausführung des Fluidkanals kann die ebenfalls flächige bzw. flachrohrförmige erste Fluidleitung zumindest Teilweise in den Fluidkanal eingeführt werden und so eine möglichst gute Anbindung der ersten Fluidleitung an den Verbinder sichergestellt werden.

Die Erfindung ist ferner auf eine Verbinderanordnung mit einem Verbinder gerichtet, wobei der Verbinder mit einer als Flachkanal ausgebildeten Fluidleitung gekoppelt ist. Vorteilhafterweise kann die Verbinderanordnung gegebenenfalls vormontiert werden und so einfacher in weitere Montageschritte bei der Montage eines Energiespeichers verwendet werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1A:: eine perspektivische Ansicht einer Verbinderanordnung;
- Fig. 1B:: eine perspektivische Längsschnittansicht einer Verbinderanordnung;
- Fig. 2A:: eine perspektivische Ansicht eines Verriegelungselements;
- Fig. 2B:: eine weitere perspektivische Ansicht des Verriegelungselements;
- Fig. 3A:: eine weitere perspektivische Längsschnittansicht der Verbinderanordnung;
- Fig. 3B:: eine seitliche Längsschnittansicht der Verbinderanordnung;
- Fig. 4:: eine Querschnittansicht der ersten Fluidleitung;
- Fig. 5A:: eine Draufsicht eines Feststellelements in einem halbfertigen Zustand;
- Fig. 5B:: eine perspektivische Ansicht eines Feststellelements im Fertigzustand;
- Fig 6:: eine Explosionsansicht einer Verbinderanordnung mit Feststellelement; und.
- Fig 7:: die Funktionsweise des Feststellelements.

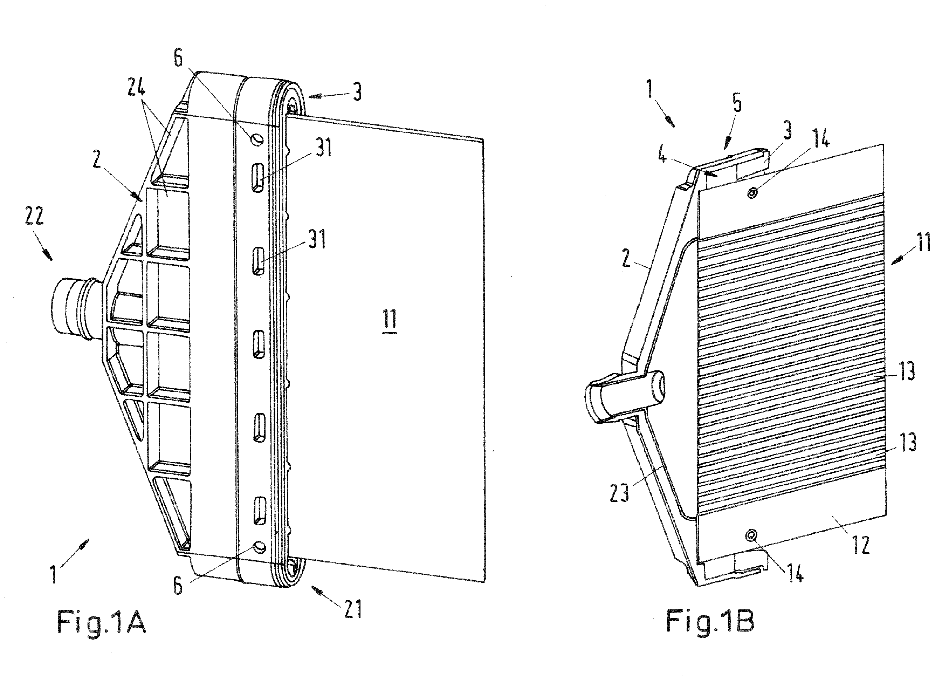

Figur 1A zeigt eine Verbinderanordnung mit einem Verbinder 1 für zwei Fluidleitungen, wobei eine erste Fluidleitung 11 rechts am ersten Anschlussabschnitt 21 gezeigt ist und eine zweite Fluidleitung nicht gezeigt aber links am zweiten Anschlussabschnitt 22 mit dem Verbinder 1 koppelbar ist. Die Verbindung der zweiten Fluidleitung kann über beliebige Standardverbindungen wie beispielsweise über eine SAE-Verbindung erfolgen. Der erste Anschlussabschnitt 21 kann ein Bereich im Inneren eines Gehäuses 2 des Verbinders 1 sein.

Die erste Fluidleitung 11 kann als sehr flaches Flachrohr bzw. Flachprofil ausgebildet sein, während die zweite Fluidleitung eine Fluidleitung mit einem üblichen kreisförmigen Querschnitt sein kann. Die beiden Fluidleitungen 11, können somit deutlich unterschiedliche Geometrien aufweisen.

Die erste Fluidleitung 11 kann eine Breite von bis zu 120mm aufweisen bei einer Höhe von beispielsweise lediglich 3mm. Sie kann beispielsweise aus Aluminium bzw. einer Aluminiumlegierung, einer anderen Metalllegierung oder einem geeigneten Kunststoff gefertigt sein.

Im Gehäuse 2 mit dem ersten und dem zweiten Anschlussabschnitt 21, 22 ist ein beide Anschlussabschnitte 21, 22 fluidisch verbindender Fluidkanal 23 vorgesehen, der in der folgenden Figur 1B gezeigt ist. Ein Verriegelungselement 3 ist mit dem Gehäuse 2 gekoppelt. Das Verriegelungselement 3 kann auch als Klemmstück bezeichnet werde. Das Gehäuse 2 weist Versteifungsrippen 24 auf, die insbesondere in einem Bereich angeordnet sein können, der dem zweiten Anschlussabschnitt 22 benachbart und von dem ersten Anschlussabschnitt 21 weiter entfernt ist.

Sowohl das Gehäuse 2 als auch das Verriegelungselement 3 können einstückig gefertigt, insbesondere spritzgegossen oder druckgegossen sein. Wie in Figur 1A angedeutet ist, können das Gehäuse 2 und das Verriegelungselement 3 miteinander verrastet sein. Es sind hierfür fünf übereinander angeordnete längliche Ausnehmungen 31 gezeigt, in die die in den folgenden Figuren gezeigten Schnappverbindung 32 einrasten.

Am Verriegelungselement 3 sind zwei Bohrungen als Feststellabschnitt 6 gezeigt. In diese Bohrungen oder auch Ausnehmungen kann ein nicht weiter gezeigtes Feststellelement eingeführt werden, welches sich auch durch eine entsprechende Ausnehmung oder Bohrung der erste Fluidleitung 11 erstreckt. Auf diese Weise kann die Fluidleitung 11 bezogen auf den Verbinder 1 festgestellt werden.

Alternativ oder zusätzlich kann als Feststellabschnitt 6 auch wenigstens eine Schnappverbindung 32 vorgesehen sein, die ebenfalls dazu ausgebildet ist, die erste Fluidleitung 11 formschlüssig am Verbinder 1 festzustellen. Diese Schnappverbindung 32 kann an einer Innenseite des Gehäuses 2 und/oder des Verriegelungselements 3 angeordnet und in Richtung auf die darin anordenbare ersten Fluidleitung 11 ausgerichtet sein. Beim Einführen der ersten Fluidleitung 11 in das Gehäuse 2 bzw. in das Verriegelungselement 3 kann diese Schnappverbindung 32 in eine entsprechende Ausnehmung oder Bohrung der ersten Fluidleitung 11 einrasten und so diese Fluidleitung 11 am Verbinder 2 feststellen.

Figur 1A zeigt ferner, dass die Außenmaße des Gehäuses 2 und des Verriegelungselements 3 in ihren Querschnitten einander gleichen. So erstrecken sich beide Gehäuseteile 2, 3 in Figur 1A in vertikaler Richtung und in Richtung der Zeichenebene im Wesentlichen gleich weit. Demgegenüber erstreckt sich das Gehäuse 2 in axialer Richtung beziehungsweise in etwa in der horizontalen Richtung der Figur 1A deutlich weiter, nämlich mehr als 2 oder mehr als 3 mal so weit, wie das Verriegelungselement 3.

Figur 1B ist eine Längsschnittansicht der in Figur 1A gezeigten Verbinderanordnung. Zusätzlich zu den in Figur 1A erkennbaren Komponenten ist hier eine Dichtung 4 gezeigt, die zwischen dem Gehäuse 2 und dem Verriegelungselement 3 angeordnet ist. Die Dichtung 4 kann als O-Ring ausgebildet sein, der die erste Fluidleitung 11 vollumfänglich umgreift, so dass kein Fluid aus den Fluidleitungen nach außerhalb des Verbinders 1 strömen kann.

Das Gehäuse 2 und das Verriegelungselement 3 sind so ausgebildet und so zueinander angeordnet, dass ein Aufnahmeabschnitt 5 zur Aufnahme der Dichtung 4 gebildet ist. Die Dichtung 4 wird dabei in einer Kammer gehalten, die den Aufnahmeabschnitt 5 bildet, und die nach radial außen von dem Gehäuse 2 und/oder dem Verriegelungselement 3, nach radial innen von der ersten Fluidleitung 11 und in den beiden axialen Richtungen zum einen von dem Gehäuse 2 und zum anderen von dem Verriegelungselement 3 begrenzt ist.

Innerhalb des Verbinders 1 ist ein Fluidkanal 23 gezeigt, der die beiden Fluidleitungen miteinander fluidisch verbindet. Der Fluidkanal 23 ist flächig ausgebildet. Er kann im Wesentlichen eine dreieckige Grundform haben. Der Fluidkanal 23 verbreitert sich vom ersten Anschlussabschnitt 21 zum zweiten Anschlussabschnitt 22, so dass er in den Bereichen, in denen er mit den Fluidleitungen kommuniziert im Wesentlichen deren Breitenerstreckung aufweist. Hierdurch kann eine möglichst verlustarme Durchströmung des Fluidkanals 23 und damit des Verbinders 1 ermöglicht werden.

Es ist ferner zu erkennen, dass die erste Fluidleitung 11 eine Mehrzahl beispielsweise parallel verlaufender Leitungskanäle 13 umfasst und zwischen den Leitungskanälen 13 und dem oberen und unteren Rand der Fluidleitung 11 je ein Randbereich 12 ohne derartige Leitungskanäle 13 vorgesehen ist. In diesem Randbereich 12 sind unten und oben je eine Durchführung 14 gezeigt, in die Feststellelemente bzw. Schnappverbindung 32 zum Feststellen der Fluidleitung 11 an dem Verbinder 1 eingeführt sein können.

Figur 1B zeigt, dass der Verbinder 1 aus den genau drei Bauteilen Gehäuse 2, Verriegelungselement 3 und Dichtung 4 bestehen kann. Falls als Feststellelement keine Schnappverbindung 32 sondern beispielsweise ein Sicherungsstift genutzt wird, so kann der Verbinder 1 aus genau vier verschiedenen Bauteilen bestehen, wobei selbstverständlich auch mehr als ein einzelner Sicherungsstift verwendet werden kann.

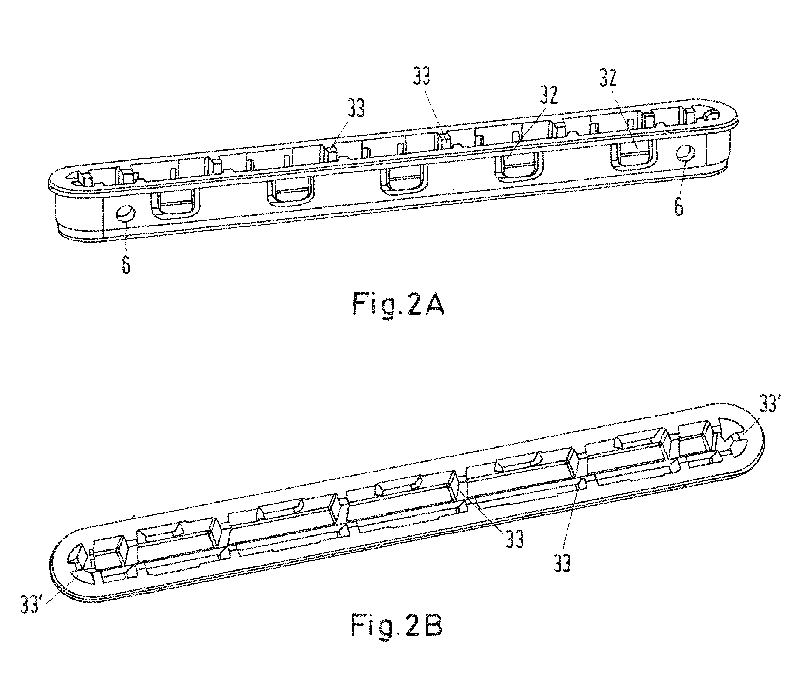

Figuren 2A und 2B zeigen unterschiedliche Ansichten des Verriegelungselements 3. In dieser Ausführungsform weist das Verriegelungselement 3 Schnappverbindungen 32 auf, während das Gehäuse 2 entsprechende Ausnehmungen 31 oder Durchführungen aufweisen muss, in die die Schnappverbindungen 32 einrasten können. Das Ausführungsbeispiel zeigt insgesamt zehn Schnappverbindungen 32, wobei je fünf Schnappverbindungen 32 einander gegenüber angeordnet sind. Ferner ist zu erkennen, dass das Verriegelungselement 3 Durchführungen bzw. Bohrungen als Feststellabschnitte 6 umfasst. Denkbar ist jedoch auch eine Ausführung, bei der alternativ oder zusätzlich entsprechende Schnappverbindungen 32 und/oder Feststellabschnitte 6 an dem Gehäuse 2 vorgesehen sind. Falls die Schnappverbindungen zusätzlich oder alternativ am Gehäuse 2 vorgesehen sind, so müssen entsprechende Ausnehmungen 31 selbstverständlich am Verriegelungselement 3 vorhanden sein, um eine Verrastung zu ermöglichen.

Figur 2B zeigt im Inneren des Verriegelungselements 3 angeordnete Rippen 33, welche dazu eingerichtet sind, die erste Fluidleitung 11 zu berühren und diese innerhalb des Verriegelungsgehäuses 3 festzustellen. Hierbei können je eine Rippe 33 und eine Schnappverbindung 32 abwechselnd angeordnet sein. Die Rippen 33 können entlang einer Längsseite und einer Breitseite des Verriegelungselements 3 angeordnet sein. Insbesondere können zwei Rippen 33' in einer Symmetrieebene des Verriegelungselements 3 angeordnet sein. Diese zwei Rippen 33' können die Fluidleitung 11 seitlich berühren bzw. feststellen.

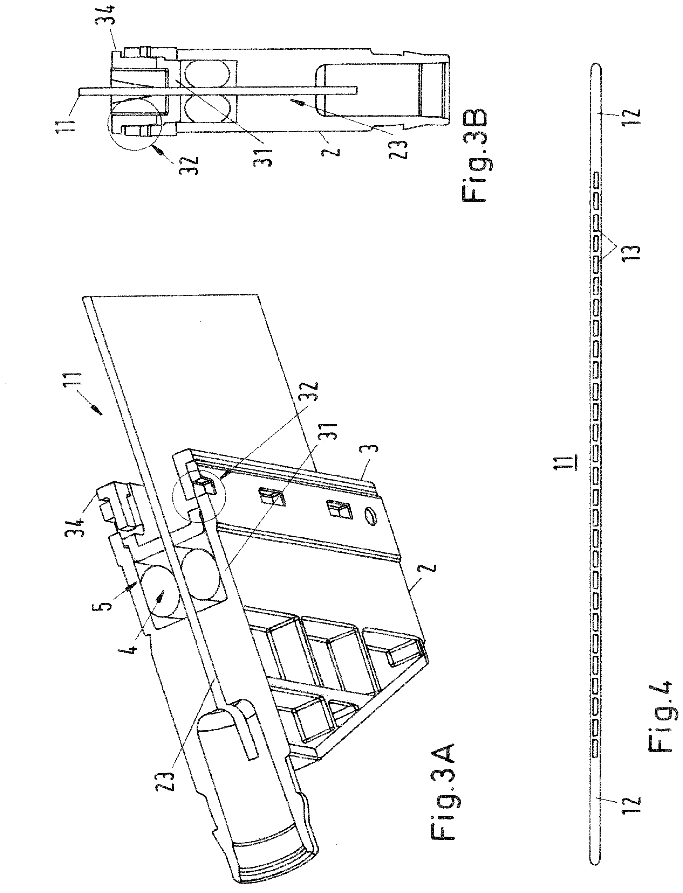

Figuren 3A und 3B zeigen zwei Schnittansichten der Verbinderanordnung, bei denen Details zur Lage der ersten Fluidleitung 11 und zur Kopplung des Gehäuses 2 mit dem Verriegelungselement 3 erkennbar sind. So ist die erste Fluidleitung 11 teilweise in den Fluidkanal 23 eingeführt und hierdurch eine bessere Kopplung der Fluidleitung 11 mit dem Verbinder 1 erreicht.

Es sind des Weiteren zwei Schnappverbindungen 32 des Verriegelungselements 3 in einem eingerasteten Zustand gezeigt. Hierbei erstrecken sich die Schnappverbindungen 32 in entsprechende Ausnehmungen 31 des Gehäuses 2 und stellen somit das Verriegelungselement 3 am Gehäuse 2 fest. Eine weitere Feststellung des Verriegelungselements 3 am Gehäuse 2 erfolgt durch einen Randabschnitt 34 des Verriegelungselements 3, welcher an einem umlaufenden Randbereich des Gehäuses 2 aufliegt und einen Anschlag bildet. Der Randabschnitt 34 und die Schnappverbindungen 32 stellen zusammen das Verriegelungselement 3 in beide axialen Richtungen am Gehäuse 2 fest.

Wie weiter aus den Figuren 3A und 3B hervorgeht, können sowohl das Gehäuse 2 als auch das Verriegelungselement 3 symmetrisch bezüglich der Ebene ausgebildet sein, in welcher sich die erste Fluidleitung 11 erstreckt. Ferner ist zu erkennen, dass sich der Aufnahmeabschnitt 5 in etwa gleich weit in axialer Richtung erstreckt, wie das Verriegelungselement 3. Insbesondere ist denkbar, dass die axiale Erstreckung des Aufnahmeabschnitts 5 mindestens 50% der axialen Erstreckung des Verriegelungselements 3 entspricht.

Figur 4 zeigt schließlich eine Querschnittansicht der ersten Fluidleitung 11. Hierbei ist zu erkennen, dass innerhalb der Fluidleitung 11 eine Vielzahl von längsverlaufenden Trenn-wänden vorgesehen ist, die innerhalb der Fluidleitung 11 eine entsprechende Vielzahl von Leitungskanälen 13 voneinander abtrennen. Die Leitungskanäle 13 erstrecken sich dabei nicht über die gesamte Breite der Fluidleitung 11, sondern es besteht ein Randbereich 12 links und rechts von den Leitungskanälen 13, in welchem keine Leitungskanäle 13 vorgesehen sind. Dieser Randbereich 12 kann sich insgesamt auf bis zu der Hälfte der Breite der Fluidleitung 11 erstrecken. Die Breite der Fluidleitung 11 ist als deren horizontale Erstreckung in Figur 4 zu verstehen, die axiale Richtung als die auf die Zeichenebene senkrecht stehende Richtung.

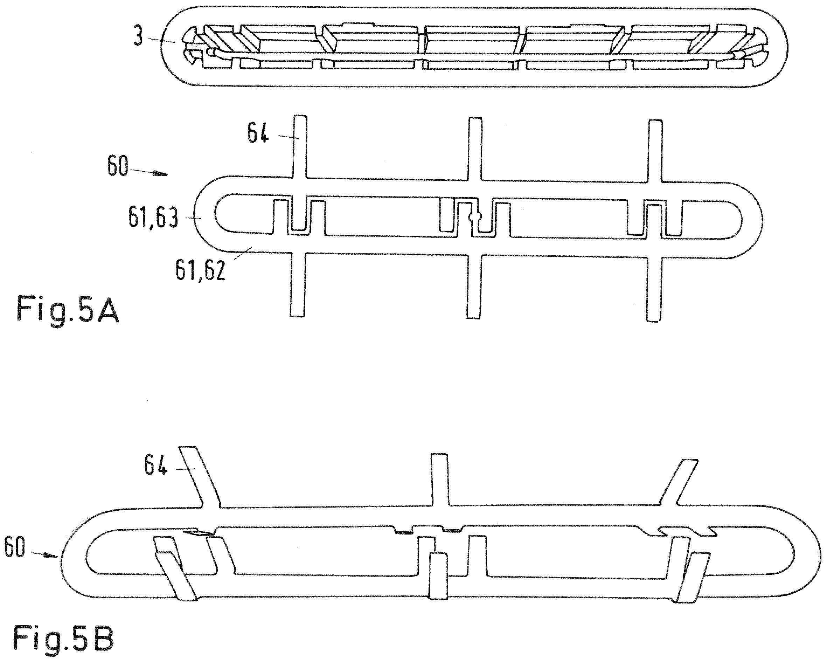

Figur 5A zeigt ein Feststellelement 60 in einem halbfertigen Zustand und darüber zum Vergleich ein Verriegelungselement 3. Das Feststellelement 60 kann ein Metall-Klemmstück sein, welches aus einer Platine bzw. aus einem Metallblech hergestellt ist. Das Feststellelement 60 kann beispielsweise mittels eines Laserschneiders aus einem Metallblech herausgeschnitten sein.

Das Feststellelement kann einen Umlaufabschnitt 61 umfassen, welcher aus zwei parallelen und/oder geraden Längsabschnitten 62 und zwei die Längsabschnitte 62 verbindenden Bogenabschnitten 63 bestehen. Die genannten Abschnitte bilden einen zusammenhängenden Umlaufabschnitt 61, durch welchen die erste Fluidleitung 11 im fertiggestellten Zustand des Umlaufabschnitts 60 durchführbar ist. Der fertiggestellte Zustand des Umlaufabschnitts 60 ist in Figur 5B gezeigt. Die Länge eines Längsabschnittes 62 entspricht in etwa der Breite der ersten Fluidleitung 11.

Entlang der Längsabschnitte 62 des Umlaufabschnitts 61 sind Biegeabschnitte 64 vorgesehen. Es können insgesamt sechs am äußeren Rand des Umlaufabschnitts 61 angeordnete Biegeabschnitte 64 vorgesehen sein, von denen jeweils zwei einander gegenüber angeordnet sind. Am inneren Rand des Umlaufabschnitts 61 können ebenfalls Biegeabschnitte 64 vorgesehen sein. Die innen liegenden Biegeabschnitte 64 können jeweils versetzt zueinander angeordnet sein. Die innen liegenden Biegeabschnitte 64 können kürzer als die außen liegenden Biegeabschnitte 64 ausgebildet sein. In dem in Figur 5A gezeigten halbfertigen Zustand des Feststellelements 60 können sowohl der Umlaufabschnitt als auch die Biegeabschnitte 64 in einer Ebene angeordnet sein. Die Biegeabschnitte 64 des Feststellelements 60 können so entlang der Längsabschnitte 62 angeordnet sein, dass die Biegeabschnitte 64 im montierten Zustand des Verbinders 1 wenigstens teilweise zwischen Rippen des Verriegelungselements 3 vorliegen.

Figur 5B zeigt das Feststellelement 60 in einem fertiggestellten Zustand, bei dem alle Biegeabschnitte 64 in eine Richtung um ca. 80°-90° gebogen sind. In diesem Zustand kann das Feststellelement 60 mit den weiteren Komponenten des Verbinders 1 gekoppelt werden, wobei die erst Fluidleitung 11 durch die vom Umlaufabschnitt 61 umgrenzte Durchführung des Umlaufabschnitts 61 hindurchgeführt sein kann.

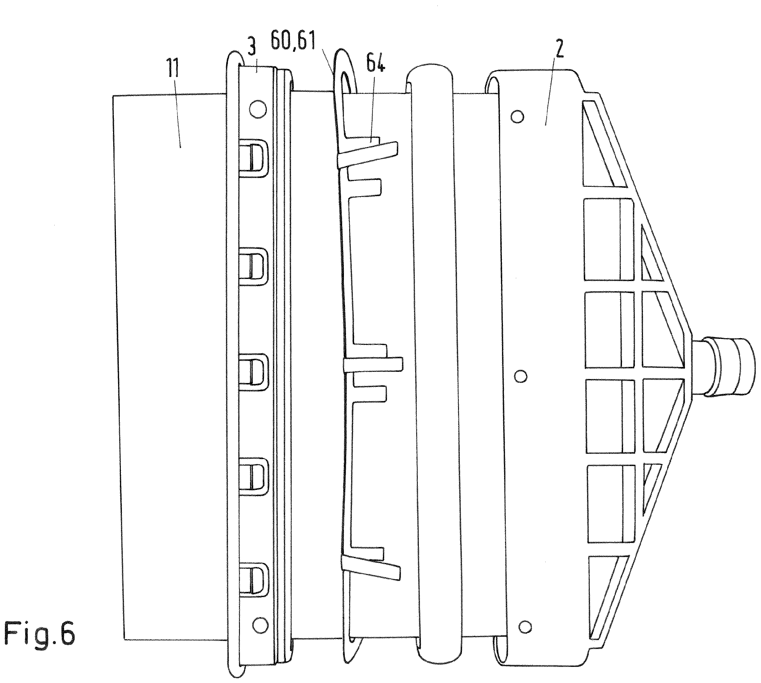

Figur 6 zeigt eine Explosionsansicht einer Verbinderanordnung mit einem Feststellelement 60, welches zwischen dem Gehäuse 2 und der Verriegelungselement 3 angeordnet ist. Die erste Fluidleitung 11 wird zur Montage der Verbinderanordnung in das Feststellelement 60 geschoben, welches sich innerhalb des Weiteren Gefüges des Verbinders befindet. Die Biegeabschnitte 64 des Feststellelements 60 können im fertigmontierten Zustand der Verbinderanordnung wenigstens teilweise innerhalb des Gehäuses 2 verortet sein. Der Umlaufabschnitt 61 des Feststellelements 60 liegt im fertigmontierten Zustand, zwischen Anlageflächen des Gehäuses 2 und des Verriegelungselements 3 und wird dadurch festgestellt.

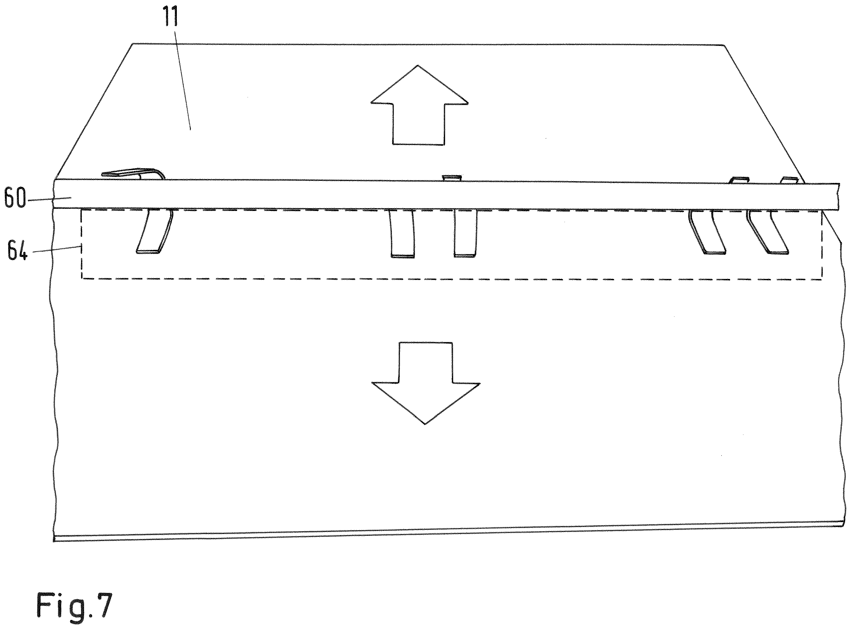

Figur 7 zeigt die Funktionsweise des Feststellelements 60. Zur Verdeutlichung sind das Gehäuse 2 und das Verriegelungselement 3 nicht gezeigt. Durch die einseitige Ausformung der Geometrie bzw. der Biegeabschnitte 64 des Feststellelements 60 liegt eine Geometrie vor, welche Wiederhaken ähnelt. Diese Wiederhaken verhindern ein ungewolltes herausziehen des Alu-Profils bzw. der ersten Fluidleitung 11 in entgegengesetzter Richtung zur Montagerichtung (oberer Pfeil). Die Montage der Fluidleitung 11 hingegen ist durch einfaches einstecken in den Verbinder 1 weiterhin möglich (unterer Pfeil).

### Bezugszeichenliste

- 1: Verbinder
- 2: Gehäuse
- 3: Verriegelungselement
- 4: Dichtung
- 5: Aufnahmeabschnitt
- 6: Feststellabschnitt
- 11: erste Fluidleitung
- 12: Randbereich
- 13: Leitungskanal
- 14: Durchführung
- 21: erster Anschlussabschnitt
- 22: zweiter Anschlussabschnitt
- 23: Fluidkanal
- 24: Versteifungsrippe
- 31: Ausnehmung
- 32: Schnappverbindung
- 33, 33': Rippe
- 34: Randabschnitt
- 60: Feststellelement
- 61: Umlaufabschnitt
- 62: Längsabschnitt
- 63: Bogenabschnitt
- 64: Biegeabschnitt

## Patentansprüche

1. Verbinder (1) für zwei Fluidleitungen unterschiedlicher Geometrien, mit einem Gehäuse (2), das einen ersten und einen zweiten Anschlussabschnitt (21, 22) und einen beide Anschlussabschnitte (21, 22) fluidisch verbindenden Fluidkanal (23) umfasst,
einem Verriegelungselement (3), das mit dem Gehäuse (2) koppelbar ist, und
einer Dichtung (4), die zwischen dem Gehäuse (2) und dem Verriegelungselement (3) anordenbar ist,
wobei das Verriegelungselement (3) und das Gehäuse (2) bezüglich des Fluidkanals (23) so zueinander anordenbar sind, dass zwischen dem Gehäuse (2) und dem Verriegelungselement (3) ein Aufnahmeabschnitt (5) zur Aufnahme der Dichtung (4) gebildet ist,
**dadurch gekennzeichnet, dass**
der erste Anschlussabschnitt (21) zum Anschließen einer ersten Fluidleitung (11) mit einem länglichen Querschnitt ausgebildet ist und der zweite Anschlussabschnitt (22) zum Anschließen genau einer zweiten Fluidleitung mit einem weiteren, insbesondere runden, Querschnitt ausgebildet ist,
wobei ein Feststellelement (60) und am Verriegelungselement (3) ein Feststellabschnitt (6) vorgesehen sind, die zum Feststellen der ersten Fluidleitung (11) ausgebildet sind, wobei das Feststellelement (60) in wenigstens eine Ausnehmung des Feststellabschnitts (6) und eine Ausnehmung oder Durchführung der ersten Fluidleitung (11) einführbar ist, und
wobei das Feststellelement (60) dazu ausgebildet ist, die erste Fluidleitung (11) formschlüssig am Verbinder (1) festzustellen.

2. Verbinder (1) nach Anspruch 1, **dadurch gekennzeichnet, dass** das Gehäuse (2) und/oder das Verriegelungselement (3) einstückig gefertigt, insbesondere spritzgegossen oder druckgegossen oder additiv hergestellt sind.

3. Verbinder (1) nach Anspruch 1 oder 2, **dadurch gekennzeichnet, dass** das Gehäuse (2) und das Verriegelungselement (3) miteinander verrastbar sind.

4. Verbinder (1) nach einem der vorhergehenden Ansprüche, **dadurch gekennzeichnet, dass** am Gehäuse (2) ein Feststellabschnitt (6) vorgesehen ist, der zum Feststellen der ersten Fluidleitung (11) ausgebildet ist.

5. Verbinder (1) nach Anspruch 4, **dadurch gekennzeichnet, dass** der Feststellabschnitt (6) wenigstens eine Schnappverbindung umfasst, wobei die Schnappverbindung dazu ausgebildet ist, die erste Fluidleitung (11) formschlüssig am Verbinder (1) festzustellen.

6. Verbinder (1) nach einem der vorhergehenden Ansprüche, **dadurch gekennzeichnet, dass** der Verbinder (1) aus den genau drei Bauteilen Gehäuse (2), Verriegelungselement (3) und Dichtung (4) besteht oder dass der Verbinder aus den drei Bauteilen Gehäuse (2), Verriegelungselement (3), Dichtung (4) und wenigstens einem Feststellelement (60) besteht.

7. Verbinder (1) nach einem der vorhergehenden Ansprüche, **dadurch gekennzeichnet, dass** die Außenmaße des Gehäuses (2) und des Verriegelungselements (3) in ihren Querschnitten einander gleichen.

8. Verbinder (1) nach einem der vorhergehenden Ansprüche, **dadurch gekennzeichnet, dass** der Fluidkanal (23) wenigstens abschnittsweise als flache und ebene Ausnehmung innerhalb des Gehäuses (2) ausgebildet ist.

9. Verbinder (1) nach dem vorhergehenden Anspruch, **dadurch gekennzeichnet, dass** die erste Fluidleitung (11) wenigstens teilweise in den Fluidkanal (23) einführbar ist, und/oder dass das Gehäuse (2) außen Versteifungsrippen (24) umfasst.

10. Verbinderanordnung mit einem Verbinder (1) nach einem der Ansprüche 1 bis 9, **dadurch gekennzeichnet, dass** der Verbinder (1) mit einer als Flachkanal ausgebildeten ersten Fluidleitung (11) gekoppelt ist.

## Claims

1. Connector (1) for two fluid lines of different geometries, having
a housing (2), which comprises a first and a second connection section (21, 22) and a fluid channel (23) which fluidically connects both connection sections (21, 22),
a locking element (3), which is couplable to the housing (2), and
a seal (4), which is arrangeable between the housing (2) and the locking element (3),
wherein the locking element (3) and the housing (2) are arrangeable with respect to one another in relation to the fluid channel (23) in such a way that a receiving section (5) for receiving the seal (4) is formed between the housing (2) and the locking element (3),
**characterized in that**
the first connection section (21) is configured for connection of a first fluid line (11) with an elongate cross section, and the second connection section (22) is configured for connection of exactly one second fluid line with another, in particular circular, cross section, wherein provision is made of a fixing element (60) and, at the locking element (3), a fixing section (6), which are configured for fixing of the first fluid line (11), wherein the fixing element (60) is introducible into at least one cutout of the fixing section (6) and one cutout or lead-through of the first fluid line (11), and
wherein the fixing element (60) is configured for form-fitting fixing of the first fluid line (11) to the connector (1).

2. Connector (1) according to Claim 1, **characterized in that** the housing (2) and/or the locking element (3) are/is manufactured as a single piece, in particular injection-moulded or die-casted or additively manufactured.

3. Connector (1) according to Claim 1 or 2, **characterized in that** the housing (2) and the locking element (3) are able to be latched to one another.

4. Connector (1) according to one of the preceding claims, **characterized in that** a fixing section (6) is provided at the housing (2) and is configured for fixing of the first fluid line (11).

5. Connector (1) according to Claim 4, **characterized in that** the fixing section (6) comprises at least one snap-fit connection, wherein the snap-fit connection is configured for form-fitting fixing of the first fluid line (11) to the connector (1).

6. Connector (1) according to one of the preceding claims, **characterized in that** the connector (1) consists of the exactly three components housing (2), locking element (3) and seal (4), or **in that** the connector consists of the three components housing (2), locking element (3), seal (4), and at least one fixing element (60) .

7. Connector (1) according to one of the preceding claims, **characterized in that** the outer dimensions of the housing (2) and the locking element (3), in terms of their cross sections, are similar to one another.

8. Connector (1) according to one of the preceding claims, **characterized in that** the fluid channel (23) is at least sectionally in the form of a flat and planar cutout within the housing (2).

9. Connector (1) according to the preceding claim, **characterized in that** the first fluid line (11) is able to be introduced at least partially into the fluid channel (23), and/or **in that** the housing (2) comprises stiffening ribs (24) at the outside.

10. Connector arrangement having a connector (1) according to one of Claims 1 to 9, **characterized in that** the connector (1) is coupled to a first fluid line (11) which is in the form of a flat channel.

## Revendications

1. Connecteur (1) pour deux conduites de fluide de géométries différentes, avec
un boîtier (2) qui comprend une première et une deuxième sections de raccordement (21, 22) et un canal de fluide (23) reliant fluidiquement les deux sections de raccordement (21, 22),
un élément de verrouillage (3) qui peut être couplé au boîtier (2), et
un joint d'étanchéité (4) qui peut être agencé entre le boîtier (2) et l'élément de verrouillage (3),
l'élément de verrouillage (3) et le boîtier (2) pouvant être agencés l'un par rapport à l'autre par rapport au canal de fluide (23) de telle sorte qu'une section de réception (5) destinée à recevoir le joint d'étanchéité (4) est formée entre le boîtier (2) et l'élément de verrouillage (3),
**caractérisé en ce que**
la première section de raccordement (21) est réalisée pour raccorder une première conduite de fluide (11) ayant une section transversale allongée et la deuxième section de raccordement (22) est réalisée pour raccorder exactement une deuxième conduite de fluide ayant une autre section transversale, notamment ronde,
il étant prévu un élément de blocage (60) et, sur l'élément de verrouillage (3), une section de blocage (6) qui sont réalisés pour bloquer la première conduite de fluide (11),
l'élément de blocage (60) pouvant être inséré dans au moins un évidement de la section de blocage (6) et un évidement ou passage de la première conduite de fluide (11), et
l'élément de blocage (60) étant réalisé pour bloquer la première conduite de fluide (11) par complémentarité de forme sur le connecteur (1).

2. Connecteur (1) selon la revendication 1, **caractérisé en ce que** le boîtier (2) et/ou l'élément de verrouillage (3) sont fabriqués d'une seule pièce, notamment par moulage par injection ou par moulage sous pression ou par fabrication additive.

3. Connecteur (1) selon la revendication 1 ou 2, **caractérisé en ce que** le boîtier (2) et l'élément de verrouillage (3) peuvent être enclenchés l'un avec l'autre.

4. Connecteur (1) selon l'une quelconque des revendications précédentes, **caractérisé en ce qu'**une section de blocage (6) est prévue sur le boîtier (2), laquelle est réalisée pour bloquer la première conduite de fluide (11).

5. Connecteur (1) selon la revendication 4, **caractérisé en ce que** la section de blocage (6) comprend au moins une connexion par encliquetage, la connexion par encliquetage étant réalisée pour bloquer la première conduite de fluide (11) par complémentarité de forme sur le connecteur (1).

6. Connecteur (1) selon l'une quelconque des revendications précédentes, **caractérisé en ce que** le connecteur (1) est constitué d'exactement trois composants, à savoir un boîtier (2), un élément de verrouillage (3) et un joint d'étanchéité (4), ou **en ce que** le connecteur est constitué des trois composants, à savoir un boîtier (2), un élément de verrouillage (3), un joint d'étanchéité (4) et au moins un élément de blocage (60).

7. Connecteur (1) selon l'une quelconque des revendications précédentes, **caractérisé en ce que** les dimensions extérieures du boîtier (2) et de l'élément de verrouillage (3) sont identiques dans leurs sections transversales.

8. Connecteur (1) selon l'une quelconque des revendications précédentes, **caractérisé en ce que** le canal de fluide (23) est réalisé au moins par sections sous forme d'évidement plat et plan à l'intérieur du boîtier (2).

9. Connecteur (1) selon la revendication précédente, **caractérisé en ce que** la première conduite de fluide (11) peut être insérée au moins partiellement dans le canal de fluide (23), et/ou **en ce que** le boîtier (2) comprend des nervures de renforcement (24) à l'extérieur.

10. Agencement de connecteur avec un connecteur (1) selon l'une quelconque des revendications 1 à 9, **caractérisé en ce que** le connecteur (1) est couplé à une première conduite de fluide (11) réalisée sous forme de canal plat.
